# EUROPEAN PATENT APPLICATION

(11) **EP 4 140 897 A1**
(43) Date of publication of application: **01.03.2023**
(21) Application number: 22188728.4
(22) Date of filing: 04.08.2022
(51) Int. Cl.: B64G 1/60, B64G 1/48, F16L 41/03, F16L 25/14, B64G 1/64, F25B 39/00

(54) **ADJUSTABLE PORT SIZE INSERT**

(30) Priority: 26.08.2021 US 202117412756
(71) Applicant: Hamilton Sundstrand Corporation, Charlotte, NC 28217-4578 (US)
(72) Inventor: HIMMELMANN, Ashley Rose, Beloit, WI, 53511 (US); KAUFMAN, Cory, Saint Louis, MO, 63139 (US); FRAZIER, Miguel, Houston, TX, 77025 (US); NAGPAL, Arjun, Houston, TX, 77059 (US)
(74) Representative: Dehns

(57) **Abstract**

A component assembly for a space environment includes a main body (12), and a plurality of main body openings (40) in the main body (12). Each main body opening has an identical cross-sectional shape. A plurality of inserts (22) are installed to the main body (12) at respective main body openings of the plurality of main body openings. Each insert of the plurality of inserts (22) defines a fluid port for a fluid flow to flow into the main body or out of the main body via the respective main body openings. At least two fluid ports have a different cross-sectional configuration.

## Description

### BACKGROUND

Exemplary embodiments pertain to the art of space vehicles and space habitats.

The shift towards deep-space, long-duration missions, and the increase in commercialization of space travel motivate the need for commonality and adaptability. In components of the vehicles and/or habitats, for example phase separators, commonality means accommodating varying flow conditions, which require different sizes of fluid ports to optimize flow, pressure loss, and configuration. An adjustable port size attachment allows for this commonality while minimizing uniqueness.

### BRIEF DESCRIPTION

In one embodiment, a component assembly for a space environment includes a main body, and a plurality of main body openings in the main body. Each main body opening has an identical cross-sectional shape. A plurality of inserts are installed to the main body at respective main body openings of the plurality of main body openings. Each insert of the plurality of inserts defines a fluid port for a fluid flow to flow into the main body or out of the main body via the respective main body openings. At least two fluid ports have a different cross-sectional configuration.

Additionally or alternatively, in this or other embodiments each insert has an insert opening having a constant cross-section from the main body opening to the fluid port.

Additionally or alternatively, in this or other embodiments each insert includes an insert base secured to the main body and a port body extending from the insert base to the fluid port.

Additionally or alternatively, in this or other embodiments the insert base is secured to the main body via one or more mechanical fasteners.

Additionally or alternatively, in this or other embodiments the insert includes a seal to prevent leakage between the insert and the main body.

Additionally or alternatively, in this or other embodiments the seal extends from the insert and surrounds the respective main body opening.

Additionally or alternatively, in this or other embodiments the insert includes an insert protrusion extending into the respective main body opening to block a portion of a cross-sectional area of the main body opening.

Additionally or alternatively, in this or other embodiments the plurality of main body openings are oval or slot-shaped.

Additionally or alternatively, in this or other embodiments the main body is a phase separator and the plurality of main body openings are each an inlet or an outlet of the phase separator.

In another embodiment, a method of operating a component assembly for a space environment includes providing a main body of the component assembly, the main body including a main body opening therein. A first insert is installed to the main body opening. The first insert defines a first fluid port for a fluid flow to flow into the main body or out of the main body via the main body opening, the first fluid port having a first cross-sectional area. The first insert is removed from the main body opening, and a second insert is installed at the main body opening. The second insert defines a second fluid port for the fluid flow. The second fluid port has a second cross-sectional area different from the first cross-sectional area.

Additionally or alternatively, in this or other embodiments the first insert includes a first insert protrusion extending into the main body opening to block a first portion of a cross-sectional area of the main body opening. The second insert includes a second insert protrusion extending into the main body opening to block a second portion of the cross-sectional area of the main body opening, and the first portion is different from the second portion.

Additionally or alternatively, in this or other embodiments the first insert has a first insert opening having a constant cross-section from the main body opening to the first fluid port.

Additionally or alternatively, in this or other embodiments the first insert is secured to the main body a first insert base.

Additionally or alternatively, in this or other embodiments the first insert base is secured to the main body via one or more mechanical fasteners.

Additionally or alternatively, in this or other embodiments a seal is installed to prevent leakage between the first insert and the main body.

Additionally or alternatively, in this or other embodiments the seal extends from the first insert and surrounds the respective main body opening.

Additionally or alternatively, in this or other embodiments the main body opening is oval or slot-shaped.

### BRIEF DESCRIPTION OF THE DRAWINGS

The following descriptions should not be considered limiting in any way. With reference to the accompanying drawings, like elements are numbered alike:
FIG. 1 is a schematic illustration of an embodiment of a component of a space vehicle or habitat;
FIG. 2 is a perspective view of an embodiment of an insert for installation at a main body opening of a component;
FIG. 3 is a perspective view of an embodiment of an insert for installation at a main body opening of a component;
FIG. 4 is a plan view of installation of an embodiment of an insert at a main body opening of a component;
FIG. 5 is a cross-sectional view of installation of an embodiment of an insert at a main body opening of a component;
FIG. 6 is a perspective view of an embodiment of an insert installed to a main body of a component; and
FIG. 7 is a perspective view of another embodiment of an insert installed to a main body of a component.

### DETAILED DESCRIPTION

A detailed description of one or more embodiments of the disclosed apparatus and method are presented herein by way of exemplification and not limitation with reference to the Figures.

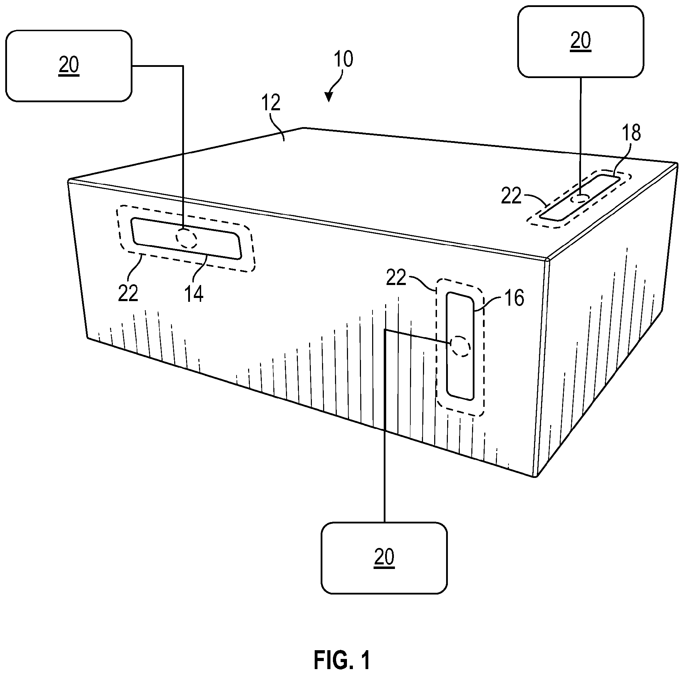

Illustrated in FIG. 1 is an embodiment of a component of a space vehicle or habitat, such as a phase separator 10. The phase separator 10 includes a main body 12 with a plurality of main body openings formed therein. The phase separator 10 is configured to separate liquid and gas components from a two-phase liquid/gas fluid. In some embodiments, the main body openings include a fluid inlet 14, a gas outlet 16 and a liquid outlet 18. The main body 12 is connected to, for example, one or more ancillary components 20 via the main body openings.

To facilitate connection of the main body 12 to the ancillary components 20, an insert 22, shown schematically in dashed lines in FIG. 1 for clarity, is installed to each of the respective main body openings of the main body 12. It is advantageous to provide the main body 12 with multiple main body openings, such as fluid inlet 14, gas outlet 16 and liquid outlet 18, which are identical in shape and size for ease of manufacturing of the main body 12 and the phase separator 10. As each of the fluid inlet 14, the gas outlet 16 and the liquid outlet 18, however, may have different flow requirements such as volume and pressure, and/or that these flow requirements may change when the phase separator 10 is connected to different ancillary components 20, the inserts 22 may be configured differently to meet the different flow requirements.

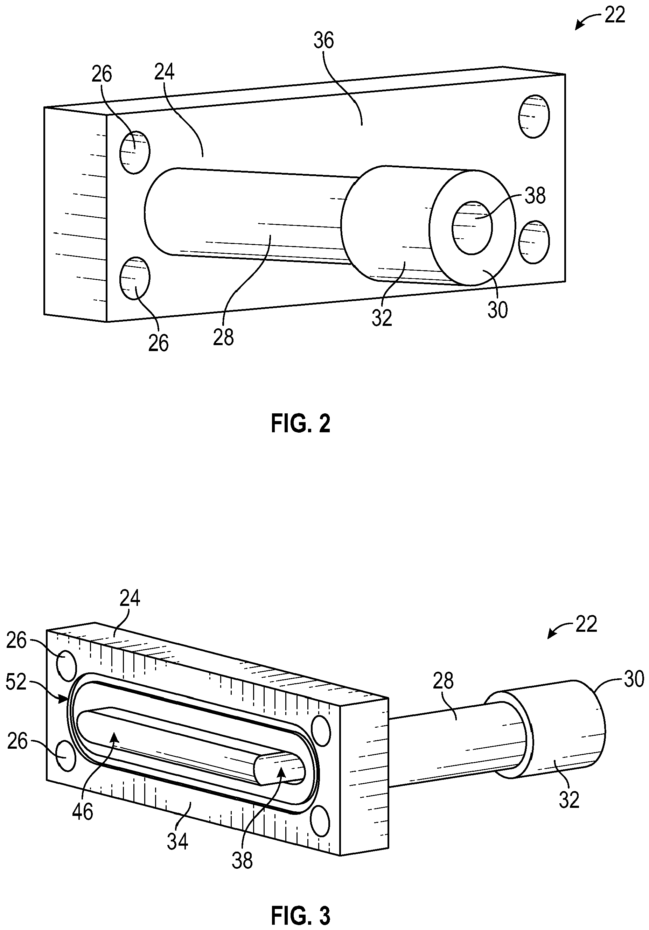

Referring now to FIGs. 2 and 3, an exemplary configuration of an insert 22 is illustrated. The insert 22 includes a base 24 having attachment features, such as fastener openings 26, for securing the inset 22 to the main body 12 via one or more mechanical fasteners (not shown). A port body 28 extends from the base 24 to a port end 30. The port end 30 may include a fitting interface 32 to connect the insert 22 to the selected ancillary component 20. The base 24 includes a back surface 34 which abuts and is secured to the main body 12 and a front surface 36 opposite the back surface 24, from which the port body 28 extends. The base 24 includes an insert opening 38 extending through the base 24 and the port body 28 to the port end 30.

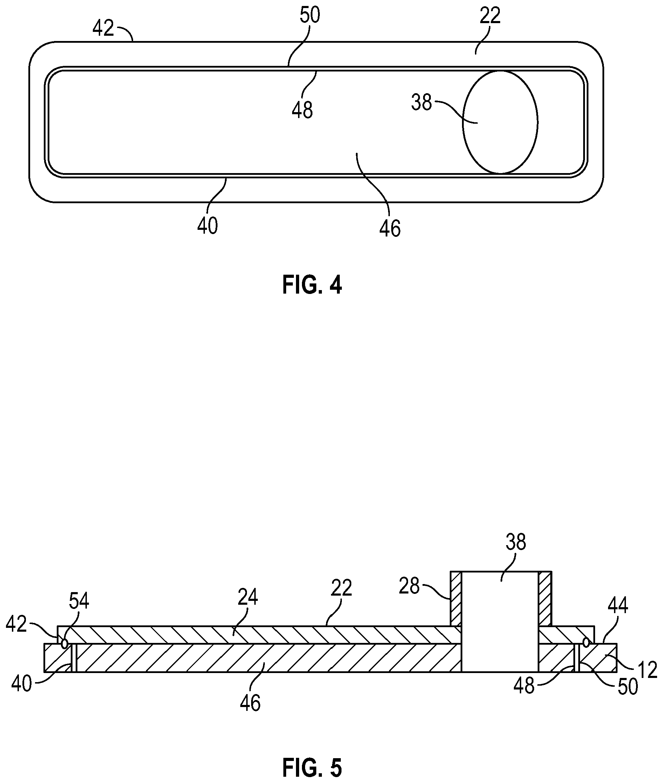

Referring now to FIGs. 4 and 5, illustrated is a plan view and a cross-sectional view of the insert 22 installed to the main body opening 40. The base 24 has a base perimeter 42 larger than the main body opening 40 so that the insert 22 overlaps the main body opening 40 at an outer main body surface 44. The insert opening 38 has a first cross-sectional area that is smaller that a second cross-sectional area of the main body opening 40 to which the insert 22 is installed. To account for the difference in these cross-sectional areas, the base 24 of the inset 22 includes a base protrusion 46 that extends into the main body opening 40 thus blocking flow into the insert 22. In some embodiments, such as shown, the base protrusion 46 has a cross-sectional area sized such that the base protrusion 46 blocks the main body opening 40 less the insert opening 38. In some embodiments, such as shown in FIG. 4, the main body opening 40 has an oval or slit shape, and the base protrusion 46 has a complimentary cross-sectional shape such that a protrusion outer perimetrical surface 48 directly abuts at least a portion of a main body opening interior surface 50 for at least a portion of the main body opening 40. While an oval or slit shape of the main body opening 40 is shown in FIG. 4 and is described herein, one skilled in the art will readily appreciate that the main body openings 40 may have other shapes, such as circular or polygonal. The base protrusion 46 blocks the fluid flow to accomplish effectively altering the geometry of the main body opening 40 from the perspective of the fluid flow.

Referring again to FIG. 5, to reduce leakage between the insert 22 and the main body 12, the insert 22 includes a seal configuration extending around the main body opening 40 when the insert 22 is installed to the main body 12. In some embodiments, the seal configuration includes a groove 52 (shown in FIG. 3) formed in the base 24 and a seal element 54 installed in the groove 52. When the insert 22 is installed to the main body 12, the seal element 54 interfaces with the outer main body surface 44 to seal between the inset 22 and the outer main body surface 44.

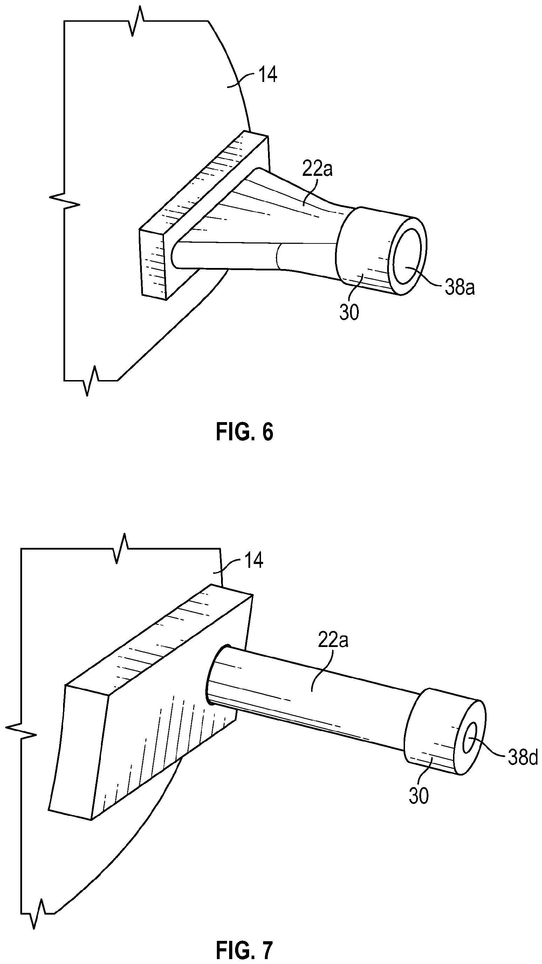

Referring now to FIG. 6 and 7, the use of the insert 22 described herein allows for easily changing between a relatively large insert opening 38a and port end 30 size shown in FIG. 6 and a relatively small insert opening 38b and port end 30 size by simply replacing insert 22a with insert 22b, as in FIG. 7. Such replacement is done without changing a size or configuration of the main body opening 40 or other features of the main body 12. This allows for the fabrication of common main body 12 and main body openings 40, which are then adaptable for use with various inlet and outlet conditions by configuration of the inserts 22 installed therein. In some embodiments, the port end 30 may be laterally centered in the insert 22 as shown in FIG. 6, or alternatively may be offset to one lateral side of the insert 22 as shown in FIG. 7.

Varying flow conditions require different sizes of fluid ports to optimize flow, pressure loss, and configuration. The insert 22 allows for adaptability to a wide range of operating conditions while reducing redesign and uniqueness of the main body 12. The flow passage including the main body opening 40 and the insert opening 36 has a constant cross-sectional area from the main body12 to the port end 30 to reduce pressure change along the flow passage.

Further, since commonality is increased, cost and lead time of manufacturing of the main body 12 and the inserts 22 may be reduced. The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A component assembly for a space environment, comprising:
a main body (12);
a plurality of main body openings (40) in the main body, each main body opening having an identical cross-sectional shape;
a plurality of inserts (22) installed to the main body at respective main body openings of the plurality of main body openings, each insert of the plurality of inserts defining a fluid port for a fluid flow to flow into the main body or out of the main body via the respective main body openings;
wherein at least two fluid ports have a different cross-sectional configuration.

2. The component assembly of claim 1, wherein each insert has an insert opening (38) having a constant cross-section from the main body opening to the fluid port.

3. The component assembly of claim 1 or 2, wherein each insert includes an insert base (24) secured to the main body and a port body (28) extending from the insert base to the fluid port.

4. The component assembly of claim 3, wherein the insert base (24) is secured to the main body (12) via one or more mechanical fasteners.

5. The component assembly of any preceding claim, wherein the insert includes a seal to prevent leakage between the insert (22) and the main body (12).

6. The component assembly of claim 5, wherein the seal extends from the insert and surrounds the respective main body opening.

7. The component assembly of any preceding claim, wherein the insert includes an insert protrusion (46) extending into the respective main body opening to block a portion of a cross-sectional area of the main body opening.

8. The component assembly of any preceding claim, wherein the plurality of main body openings (40) are oval or slot-shaped.

9. The component assembly of any preceding claim, wherein the main body (12) is a phase separator and the plurality of main body openings are each an inlet or an outlet of the phase separator.

10. A method of operating a component assembly for a space environment, comprising:
providing a main body of the component assembly, the main body including a main body opening therein;
installing a first insert to the main body opening, the first insert defining a first fluid port for a fluid flow to flow into the main body or out of the main body via the main body opening, the first fluid port having a first cross-sectional area;
removing the first insert from the main body opening; and
installing a second insert at the main body opening, the second insert defining a second fluid port for the fluid flow, the second fluid port having a second cross-sectional area different from the first cross-sectional area.

11. The method of claim 10, wherein:
the first insert includes a first insert protrusion extending into the main body opening to block a first portion of a cross-sectional area of the main body opening;
the second insert includes a second insert protrusion extending into the main body opening to block a second portion of the cross-sectional area of the main body opening; and
the first portion is different from the second portion.

12. The method of claim 10 or 11, wherein the first insert has a first insert opening having a constant cross-section from the main body opening to the first fluid port.

13. The method of any of claims 10-12, further comprising securing the first insert to the main body a first insert base, and preferably wherein the first insert base is secured to the main body via one or more mechanical fasteners.

14. The method of any of claims 10-13, further comprising installing a seal to prevent leakage between the first insert and the main body, and preferably wherein the seal extends from the first insert and surrounds the respective main body opening.

15. The method of any of claims 10-14, wherein the main body opening is oval or slot-shaped.
